# EUROPEAN PATENT SPECIFICATION

(11) **EP 2 306 629 B1**
(45) Date of publication and mention of the grant of the patent: **30.07.2014**
(21) Application number: 10177221.8
(22) Date of filing: 16.09.2010
(51) Int. Cl.: H02M 7/483, H02M 7/487

(54) **Five-level converter**
Fünfstufenwandler
Convertisseur à cinq niveaux

(30) Priority: 25.09.2009 JP 2009220665
(43) Date of publication of application: 06.04.2011
(73) Proprietor: Fuji Electric Co., Ltd., Kawasaki-shi Kanagawa (JP)
(72) Inventor: Yatsu, Makoto, Kanagawa 210-0856 (JP); Yoda, Kazuyuki, Tokyo 141-0032 (JP)
(74) Representative: MERH-IP Matias Erny Reichl Hoffmann

(56) References cited:
- SERGIO A GONZALEZ ET AL: "Analysis of a Cascade Asymmetric Topology for Multilevel Converters", INDUSTRIAL ELECTRONICS, 2007. ISIE 2007. IEEE INTERNATIONAL SYMPOSIUM ON, IEEE, PI, 1 June 2007 (2007-06-01), pages 1027-1032, XP031156275, ISBN: 978-1-4244-0754-5
- PABLO LEZANA ET AL: "Mixed Multicell Cascaded Multilevel Inverter", INDUSTRIAL ELECTRONICS, 2007. ISIE 2007. IEEE INTERNATIONAL SYMPOSIUM ON, IEEE, PI, 1 June 2007 (2007-06-01), pages 509-514, XP031156185, ISBN: 978-1-4244-0754-5
- HAEDERLI C ET AL: "Neutral point control in multi level converters applying novel modulation schemes", POWER ELECTRONICS SPECIALISTS CONFERENCE, 2006. PESC '06. 37TH IEEE JEJU, KOREA 18-22 JUNE 2006, PISCATAWAY, NJ, USA,IEEE, 18 June 2006 (2006-06-18), pages 1-8, XP010945275, DOI: DOI:10.1109/PESC.2006.1711981 ISBN: 978-0-7803-9716-3

## Description

### BACKGROUND OF THE INVENTION

### 1. Field of the Invention

The present invention relates to a power semiconductor converter, and more particularly to a five-level converter that can directly output five voltage levels.

### 2. Description of the Related Art

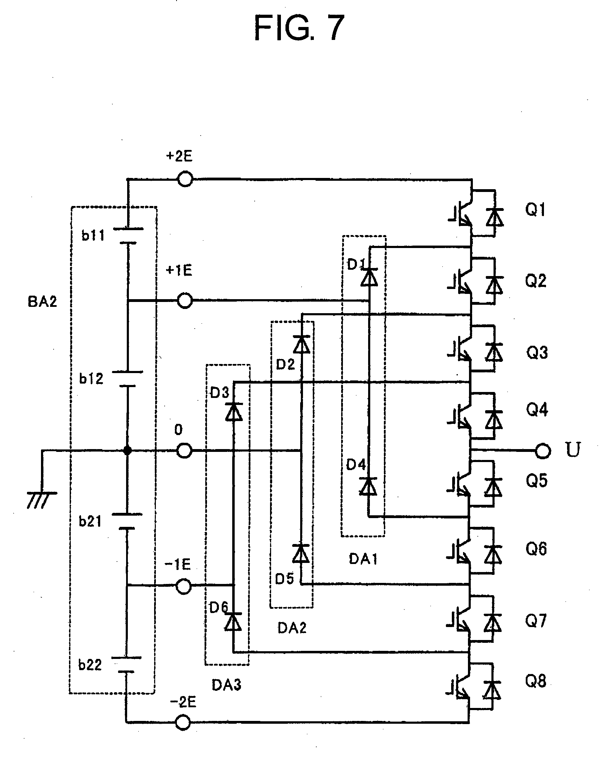

FIG. 7 shows one phase of a five-level converter disclosed, for example, in Japanese Patent Application Laid-open No. 2006-271042.
In the configuration shown in FIG. 7, a series circuit of semiconductor switches Q1 to Q8 is connected between a positive terminal and a negative terminal of a DC combined power source BA2 in which DC unit power sources b11 to b22 are connected in series, and the connection point of the semiconductor switches Q4 and Q5 serves as an AC output point U. Further, the external terminals of a diode arm pair DA1 formed by the series-connected diodes D1 and D4 are connected to the connection point of the semiconductor switches Q1 and Q2 and the connection point of the semiconductor switches Q5 and Q6, respectively. The mid-point terminal, i.e., the node between the diodes D1 and D4, is connected to the connection point of the DC unit power sources b11 and b12. "External terminals" of an arm pair as referred to herein is a term used to distinguish the two end terminals from the mid-point terminal, and "terminal" is sometimes simply used therefor.

Likewise, the external terminals of a diode arm pair DA2 formed by the series-connected diodes D2 and D5 are connected to the connection point of the semiconductor switches Q2 and Q3 and the connection point of the semiconductor switches Q6 and Q7, respectively, and the mid-point terminal thereof is connected to the connection point of the DC unit power sources b12 and b21. Further, the external terminals of a diode arm pair DA3 formed by the series-connected diodes D3 and D6 are connected to the connection point of the semiconductor switches Q3 and Q4 and the connection point of the semiconductor switches Q7 and Q8, respectively, and the mid-point terminal thereof is connected to the connection point of the DC unit power sources b21 and b22.

In such a configuration, where the semiconductor switches Q1 to Q4 are switched ON and Q5 to Q8 are switched OFF, a potential (or voltage level relative to the reference potential of the connection point between b12 and b21) of +2E is outputted at the AC output terminal U, and where the semiconductor switches Q2 to Q5 are switched ON and Q1 , Q6 to Q8 are switched OFF, a voltage of a 1E level is outputted at the AC output terminal U. Likewise, where the semiconductor switches Q3 to Q6 are switched ON and Q1, Q2, Q7 and Q8 are switched OFF, a zero-level voltage is outputted at the AC output terminal U.

Further, where the semiconductor switches Q4 to Q7 are switched ON and Q1 to Q3 and Q8 are switched OFF, a voltage of a -1E level is outputted at the AC output terminal U, and where the semiconductor switches Q5 to Q8 are switched ON and Q1 to Q4 are switched OFF, a voltage of a - 2E level is outputted at the AC output terminal U.
As described hereinabove, voltages of five different levels (2E, 1E, 0, -1E, -2E) can selectively be outputted at the AC output terminal U by ON-OFF controlling the semiconductor switches Q1 to Q8.

However, in the configuration shown in FIG. 7, four is the largest number of semiconductor switches through which an output current (also referred to simply as "current") passes from the DC combined power source BA2 to the AC output terminal U. The resultant problem is a substantial conduction loss in the semiconductor switches, impairing the efficiency of the entire converter, and the converter is difficult to reduce in size and cost.
Further, even when the voltage and current outputted from the AC output terminal U have a positive-negative symmetrical AC waveform, the power shared by the DC unit power sources b11 and b12 is in principle not the same and therefore respective independent DC power sources are necessary. The same is true for b21 and b22. As a consequence, a total of four unit power sources b11 to b22 that can supply power independently are necessary for the DC combined power source BA2 and therefore strict restrictions are placed on the converter manufacture.

This problem of unbalance of DC power sources has been addressed for example in "A multilevel voltage-source converter system with balanced DC voltage", IEEE-PESC95 Conference Record, pp. 1144 to 1150.

Further prior art multi level inverters are known from:
"Analysis of a Cascade Asymmetric Topology for Multilevel Converters", SERGIO A GONZALEZ ET AL, Industrial Electronics, 2007. ISIE 2007. IEEE International Symposium on ,1 June 2007, pages 1027-1032, XP031156275,
"Mixed Multicell Cascaded Multilevel Inverter", PABLO LEZANA ET AL, Industrial Electronics, 2007. ISIE 2007. IEEE International Symposium on, 1 June 2007, pages 509-514, XP031156185,
"Neutral point control in multi level converters applying novel modulation schemes", HAEDERLI C ET AL, Power Electronics Specialists Conference, 2006. PESC'06. 37TH IEEE JEJU, KOREA 18-22 JUNE 2006, PISCATAWAY, NJ, USA,IEEE, 18 June 2006 (2006-06-18), pages 1-8, XP010945275.

Accordingly, the problem to be resolved by the present invention is to decrease the generated loss by decreasing the number of semiconductor switches through which a current passes with respect to that in the conventional converters. Another problem is to alleviate the limitations placed on application so as to ensure the possibility of the converter operating as a DC input power source even with two unit power sources.

In order to resolve the above-described problems, the invention as defined in claim 1 provides a five-level converter that has three DC terminals divided into two groups, generates five voltage levels from an input DC power source having three different voltage levels including zero and can randomly selectively output the five voltage levels, the five-level converter comprising:
first, second, and third arm pairs constituted by combining in series two arms composed of semiconductor devices and an AC switch constituted by combining semiconductor devices, wherein the first arm pair is connected between a first DC terminal with the highest potential of the DC power source and a second DC terminal with an intermediate potential, the second arm pair is connected between the second DC terminal and a third DC terminal with the lowest potential, and the third arm pair is connected between the mid-point terminal of the first arm pair and a mid-point terminal of the second arm pair, a series capacitor circuit in which two capacitors are connected in series is connected in parallel with the third arm pair, and the AC switch is connected between the intermediate connection point of the series capacitor circuit and the mid-point terminal of the third arm pair such that the mid-point terminal of the third arm pair serves as an output terminal.

In the converter according to the invention as defined in claim 1, a coupling reactor can be provided that is composed of a first winding connected between one end of the series capacitor circuit and the mid-point terminal of the first arm pair, and a second winding connected between the other end of the series capacitor circuit and the mid-point terminal of the second arm pair, such that an inrush current component flowing from the DC power source to the series capacitor circuit via the first arm pair, the series capacitor circuit, and the second arm pair can be inhibited (invention as in claim 2).
In the converter according to the invention as defined in claim 1 or 2, a voltage balance circuit for maintaining equal voltages of two capacitors constituting the series capacitor circuit can be provided (invention as in claim 3).

Further, in the converter according to the invention as defined in claim 3, the voltage balance circuit can be constituted by a fourth arm pair that is connected in parallel to the series capacitor circuit and is constituted by combining in series two arms composed of semiconductor devices, and a reactor connected between the mid-point terminal of the fourth arm pair and the intermediate connection point of the series capacitor circuit (invention as in claim 4). In the converter according to the invention as in any one of claims 1 to 4, the AC switch can be constituted by connecting arms composed of semiconductor devices in reverse series (invention as in claim 5) or the AC switch can be constituted by reverse parallel connection of semiconductor devices having reverse blocking voltage (invention as in claim 6).

### SUMMARY OF THE INVENTION

According to the invention, the number of semiconductor switches through which a current passes from the DC power source serving as an input to the AC output is three at maximum. Therefore, loss is decreased and eventually the converter can be increased in efficiency and reduced in cost and size. Further, because the input DC power source is constituted by combining two unit power sources, a five-level converter can be provided under conditions similar to those of the usual three-level converter.

### BRIEF DESCRIPTION OF THE DRAWINGS

FIG. 1 is a circuit diagram illustrating an embodiment of the present invention;
FIG. 2 is a circuit diagram illustrating a variation example of the configuration shown in FIG. 1 ;
FIG. 3 is a circuit diagram illustrating the first variation example of the configuration shown in FIG. 2;
FIG. 4 is a circuit diagram illustrating the second variation example of the configuration shown in FIG. 2;
FIG. 5 is a circuit diagram illustrating the third variation example of the configuration shown in FIG. 2;
FIG. 6 is a waveform diagram illustrating the operation of the configurations shown in FIG. 1 to FIG. 5; and
FIG. 7 is a circuit diagram illustrating the conventional five-level converter.

### DESCRIPTION OF THE PREFERRED EMBODIMENTS

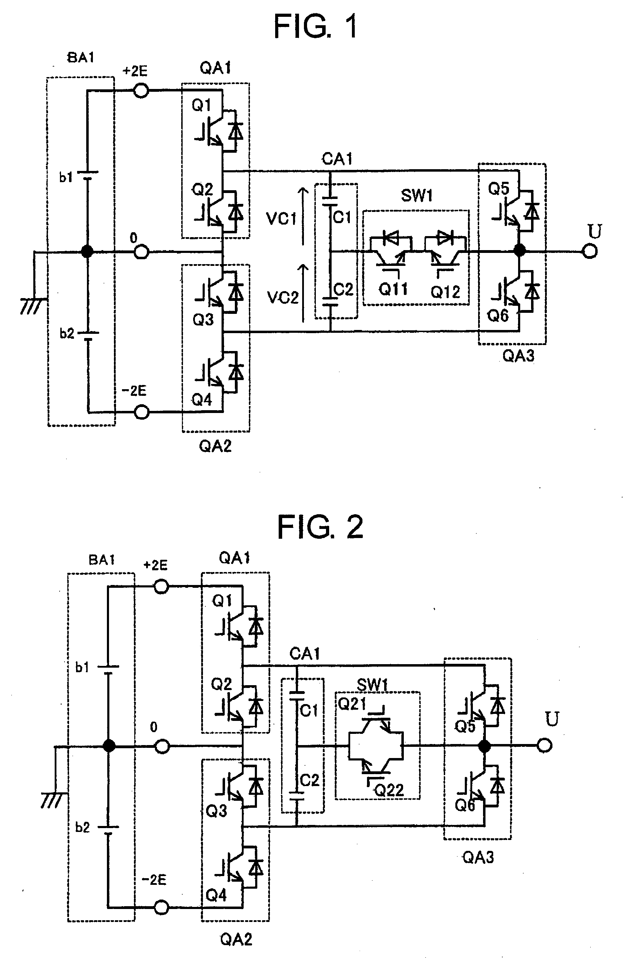

FIG. 1 is a circuit diagram illustrating an embodiment of the present invention.
In this circuit diagram, DC unit power sources b1 and b2 each having a voltage of 2E V are connected in series, thereby constituting a DC combined power source BA1. External terminals of an arm pair QA1 composed of series-connected semiconductor switches Q1, Q2 are connected to a positive terminal and an intermediate terminal, respectively, of the DC combined power source BA1, and external terminals of an arm pair QA2 composed of series-connected semiconductor switches Q3, Q4 are connected to the intermediate terminal and a negative terminal, respectively.

External terminals of an arm pair QA3 composed of series-connected semiconductor switches Q5, Q6 are respectively connected to the mid-point terminals of the arm pairs QA1 and QA2, and the mid-point terminal thereof serves as an AC output point U. A series capacitor circuit CA1 composed of capacitors C1, C2 is connected in parallel with the external terminals of the arm pair QA3, and an AC switch SW1 composed of semiconductor switches Q11, Q12 is connected between the intermediate connection point of the capacitors C1 and C2 and the mid-point terminal of QA3.

In the circuit shown in FIG. 1 , where the semiconductor switches Q1, Q3, Q5 are switched ON and Q2, Q4 and Q6, and Q12 of SW1 are switched OFF, a +2E voltage is outputted to the AC output point U, and in this case the output current passes through two semiconductor switches, namely Q1 and Q5.
Further, the voltage applied to Q12 of the AC switch SW1 that has been switched OFF is clamped to the voltage of the capacitor C1. Further, because Q1 and Q3 are switched ON at this time, the voltage of the series capacitor circuit CA1 is maintained at 2E, which is equal to the voltage of the unit power source b1.
Where the AC switch SW1 is then entirely switched ON from this state and Q5 is switched OFF, a voltage +VC2 of the capacitor C2 is outputted at the AC output point U, and in this case the output current passes through three semiconductor switches Q3, Q11, Q12 or Q1,Q11,Q12. Further, the voltage applied to the semiconductor switches that have been switched OFF in QA1 to QA3 is clamped to 2E at maximum.

Then, where Q2, Q5, Q4 are switched ON and Q1, Q3, Q6, and switch SW1 are switched OFF, a zero voltage is outputted at the AC output point U, and the output current in this case passes through two semiconductor switches Q2, Q5. Likewise, where Q1, Q3, Q6 are switched ON and Q2, Q4, Q5, and switch SW1 are switched OFF, a zero voltage is outputted at the AC output point U, and the output current in this case passes through two semiconductor switches Q1, Q3. Further, in these cases, the voltage applied to the semiconductor switches that have been switched OFF in QA1 to QA3 is clamped to 2E at maximum. Likewise, the voltage applied to the AC switch SW1 that has been switched OFF is clamped to the voltage of the capacitor C1 or C2.

Where the semiconductor switches Q2, Q4, Q6 are switched ON and Q1, Q3, Q5, and SW1 are switched OFF, a -2E voltage is outputted at the AC output point U, and in this case the output current passes through two semiconductor switches Q4, Q6. Where Q1 is switched OFF and Q2 is switched ON, the voltage applied to the semiconductor switches that have been switched OFF in QA1 to QA3 is clamped to 2E at maximum. Likewise, the voltage applied to Q11 of the AC switch SW1 that has been switched OFF is clamped to the voltage VC2 of the capacitor C2. In this case, since Q2 and Q4 are switched ON, the voltage of the series capacitor circuit CA1 is maintained at 2E similarly to the voltage of b2.

Where the AC switch SW1 is switched ON and Q6 is switched OFF from the above-described state, a voltage -VC1 of the capacitor C1 is outputted at the AC output point U. In this case, the output current flows through three semiconductor switches Q11, Q12, Q4 or Q11, Q12, Q2. The voltage applied to the semiconductor switches that have been switched OFF in QA1 to QA3 is clamped to 2E at maximum.
The above-described series of operations makes it possible to output a voltage at the following five levels: +2E, +VC2, 0, -VC1, -2E at the AC output point U.

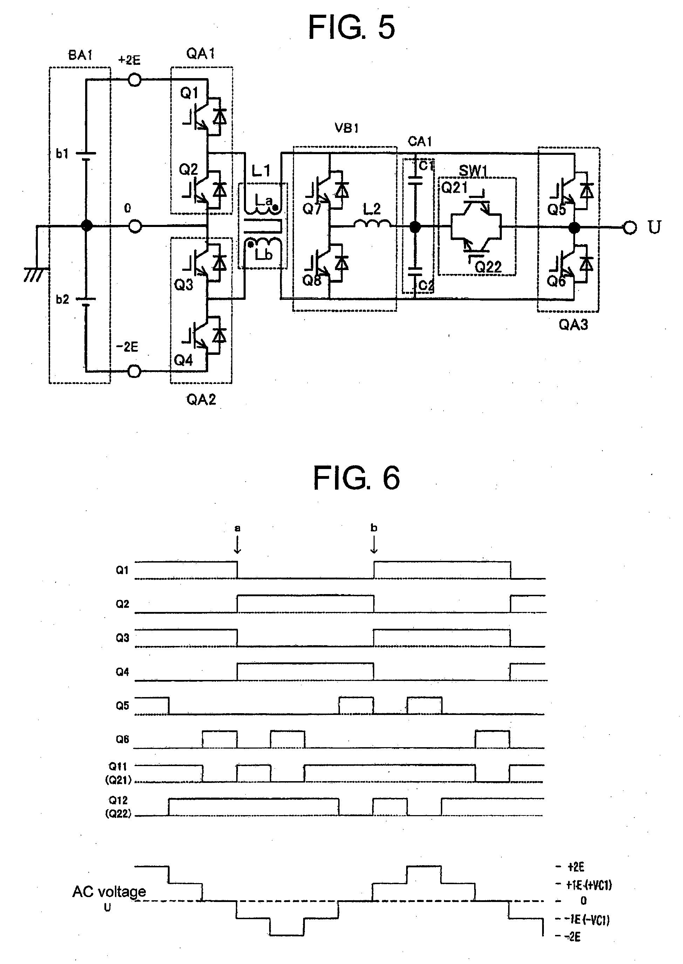

FIG. 6 shows an ON-OFF pattern of semiconductor switches Q1 to Q6, Q11, and Q12 and a voltage waveform at the AC output point U in this case. Here, when the capacitors C1, C2 have the same capacity and the operation of semiconductor switches Q1 and Q4, Q2 and Q3, Q5 and Q6, and Q11 and Q12 is symmetrical in the positive-negative periods, as shown in FIG. 6, both the voltage and the AC output current at the AC output point U will have positive-negative symmetry. As a result, the voltages VC1 , VC2 of capacitors C1, C2 will be on average the same voltage 1 E, and the voltage of the AC output point U will be +2E, +VC2 = +1E, 0, -VC1 = -1E, -2E.

FIG. 2 shows a variation example of the configuration shown in FIG. 1. The difference between this example and that shown in FIG. 1 is that the reverse series connection of the semiconductor switches Q11 and Q12 constituting the AC switch SW1 is changed to a reverse parallel connection of Q21 and Q22 based on reverse blocking IGBTs. Such a change causes no changes in operational functions and the operations are performed in exactly the same manner as in the configuration shown in FIG. 1. Further, when an output current passes through SW1, the current passes only through either of Q21 and Q22 in the configuration shown in FIG. 2, whereas in the configuration shown in FIG. 1, the current passes through both Q11 and Q12. As a result, the maximum number of semiconductor switches (including reverse blocking IGBTs) through which the output current passes in the entire five-level converter is reduced from three to two, thereby enabling further improvement of efficiency.

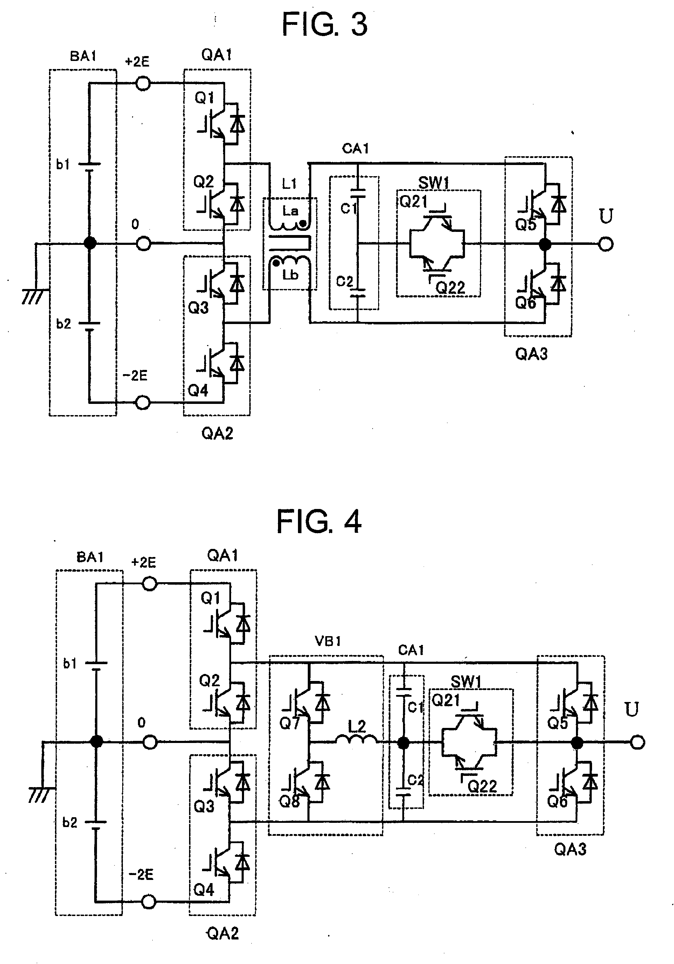

FIG. 3 shows a first variation example of the configuration shown in FIG. 2. The difference between this example and that shown in FIG. 2 is that windings La, Lb of a coupling reactor L1 are connected between the series capacitor circuit CA1 and arm pairs QA1, QA2, respectively. The operation of the circuit shown in FIG. 3 is similar to that shown in FIG. 2 and the explanation thereof is omitted. However, in the configuration shown in FIG. 2, the connection destination of the series capacitor circuit CA1 is switched to the unit power source b1 or b2 by a switching operation of Q1 to Q4 at timings of points a and b, as shown in FIG. 6. In this case, even if a slight difference is present in the voltages at b1 and b2, an inrush current created by this difference in electric potential is generated in the series capacitor circuit CA1.

Accordingly, the inrush current to the series capacitor circuit CA1 is inhibited by inserting the coupling reactor L1 as shown in FIG. 3. Further, since the reactor L1 is configured as a coupling reactor composed of windings La, Lb, the impedance with respect to the inrush current to the series capacitor circuit CA1 is raised, the inhibition effect thereof is increased, and the output impedance with respect to the output U is reduced.
Further, by conducting PWM control of Q1 or Q2, rather than simply switching Q1 and Q2 ON-OFF at the timings of points a and b in FIG. 6 under a voltage condition of b1 > b2, it is possible to inhibit completely the inrush current created by the difference in voltage at b1, b2, and CA1. Likewise, in the case b2 > b1, the inrush current can be inhibited by the PWM control of Q3, Q4.

FIG. 4 shows the second variation example of the configuration shown in FIG. 2. The difference between this example and that shown in FIG. 2 is that a voltage balance circuit VB1 composed of Q7, Q8, and a reactor L2 is additionally provided to balance the voltages of capacitors C1, C2 of the series capacitor circuit CA1.
Thus, when a DC component is present in the AC output current due to properties of the AC load connected to the AC output point U, the voltage balance of capacitors C1, C2 can be disrupted. In this case, the same voltage of C1, C2 can be maintained, for example, by alternately ON-OFF switching Q7, Q8 of the voltage balance circuit VB1 at the same time interval ratio.
FIG. 5 shows a third variation example of the configuration shown in FIG. 2. In this case, the voltage balance circuit VB1 is added to the circuit shown in FIG. 3. The operation of the configuration obtained is similar to that of the configuration shown in FIG. 4 and the explanation thereof is herein omitted.

## Claims

1. A five-level converter that has three DC terminals divided into two groups, is adapted to generate five voltage levels from an input DC power source (BA1) having three different voltage levels including zero and to randomly selectively output the five voltage levels, the five-level converter comprising:
first, second, and third arm pairs (QA1, QA2, QA3) constituted by combining in series two arms composed of semiconductor devices (Q1-Q6), and an AC switch (SW1) constituted by combining semiconductor devices Q11, Q12; Q21, Q22), wherein
the first arm pair (QA1) is connected between a first DC terminal (+2E) with the highest potential of the DC power source (BA1) and a second DC terminal (0) with an intermediate potential, the second arm pair (QA2) is connected between the second DC terminal (0) and a third DC terminal (-2E) with the lowest potential, and the third arm pair (QA3) is connected between the mid-point terminal of the first arm pair (QA1) and a mid-point terminal of the second arm pair (QA2), a series capacitor circuit (CA1) in which two capacitors (C1, C2) are connected in series is connected in parallel with the third arm pair (QA3), and the AC switch (SW1) is connected between the intermediate connection point of the series capacitor circuit (CA1) and the mid-point terminal of the third arm pair (QA3) such that the mid-point terminal of the third arm pair (QA3) serves as an output terminal (U).

2. The five-level converter according to claim 1, wherein a coupling reactor (L1) is provided that is composed of a first winding (La) connected between one end of the series capacitor circuit (CA1) and the mid-point terminal of the first arm pair (QA1), and a second winding (Lb) connected between the other end of the series capacitor circuit (CA1) and the mid-point terminal of the second arm pair (QA2), such that an inrush current component flowing from the DC power source (BA1) to the series capacitor circuit (CA1) via the first arm pair (QA1), the series capacitor circuit (CA1), and the second arm pair (QA2) is inhibited.

3. The five-level converter according to claim 1 or 2, further comprising a voltage balance circuit VB1) for maintaining equal voltages of the two capacitors (C1, C2) constituting the series capacitor circuit (CA1).

4. The five-level converter according to claim 3, wherein the voltage balance circuit (VB1) is constituted by a fourth arm pair that is connected in parallel to the series capacitor circuit (CA1) and is constituted by combining in series two arms composed of semiconductor devices (Q7, Q8), and a reactor (L2) connected between the mid-point terminal of the fourth arm pair and the intermediate connection point of the series capacitor circuit (CA1).

5. The five-level converter according to any one of claims 1 to 4, wherein the AC switch (SW1) is constituted by connecting arms composed of semiconductor devices (Q11, Q12) in reverse series.

6. The five-level converter according to any one of claims 1 to 5, wherein the AC switch (SW1) is constituted by reverse parallel connection of semiconductor devices (Q21, Q22) having reverse blocking voltage.

## Patentansprüche

1. Fünffachpegel-Umsetzer, der drei Gleichspannungsanschlüsse, die in zwei Gruppen unterteilt sind, besitzt und dafür ausgelegt ist, fünf Spannungspegel von einer Eingangsgleichspannungsquelle (BA1) mit drei verschiedenen Spannungspegeln einschließlich null zu erzeugen und die fünf Spannungspegel zufällig wahlweise auszugeben, wobei der Fünffachpegel-Umsetzer Folgendes umfasst:
ein erstes, ein zweites und ein drittes Armpaar (QA1, QA2, QA3), die durch serielles Kombinieren von zwei Armen, die aus Halbleitervorrichtungen (Q1-Q6) aufgebaut sind, gebildet sind, und einen ersten Wechselspannungsschalter (SW1), der durch Kombinieren von Halbleitervorrichtungen (Q11, Q 12; Q21, Q22) gebildet sind, wobei
das erste Armpaar (QA1) zwischen einen ersten Gleichspannungsanschluss (+2E) mit dem höchsten Potential der Gleichspannungsquelle (BA1) und einen zweiten Gleichspannungsanschluss (0) mit einem Zwischenpotential geschaltet ist, das zweite Armpaar (QA2) zwischen den zweiten Gleichspannungsanschluss (0) und einen dritten Gleichspannungsanschluss (-2E) mit dem niedrigsten Potential geschaltet ist und das dritte Armpaar (QA3) zwischen den mittleren Anschluss des ersten Armpaars (QA1) und einen mittleren Anschluss des zweiten Armpaars (QA2) geschaltet ist, eine Reihenkondensatorschaltung (CA1), in der zwei Kondensatoren (C1, C2) in Reihe geschaltet sind, zu dem dritten Armpaar (QA3) parallel geschaltet ist und der Wechselspannungsschalter (SW1) zwischen den Zwischenverbindungspunkt der Reihenkondensatorschaltung (CA1) und den mittleren Anschluss des dritten Armpaars (QA3) geschaltet ist, so dass der mittlere Anschluss des dritten Armpaars (QA3) als ein Ausgangsanschluss (U) dient.

2. Fünffachpegel-Umsetzer nach Anspruch 1, wobei eine Kopplungsdrosselspule (L1) vorgesehen ist, die aus einer ersten Wicklung (La), die zwischen ein Ende der Reihenkondensatorschaltung (CA1) und den mittleren Anschluss des ersten Armpaars (QA1) geschaltet ist und aus einer zweiten Wicklung (Lb), die zwischen das andere Ende der Reihenkondensatorschaltung (CA1) und den mittleren Anschluss des zweiten Armpaars (QA2) geschaltet ist, aufgebaut ist, derart, dass eine Stromstoßkomponente, die von der Gleichspannungsquelle (BA1) zu der Reihenkondensatorschaltung (CA1) über das erste Armpaar (QA1), die erste Reihenkondensatorschaltung (CA1) und das zweite Armpaar (QA2) fließt, verhindert wird.

3. Fünffachpegel-Umsetzer nach Anspruch 1 oder 2, der ferner eine Spannungsausgleichsschaltung (VB1) umfasst, um gleiche Spannungen der zwei Kondensatoren (C1, C2), die die Reihenkondensatorschaltung (CA1) bilden, aufrechtzuerhalten.

4. Fünffachpegel-Umsetzer nach Anspruch 3, wobei die Spannungsausgleichsschaltung (VB1) durch ein viertes Armpaar gebildet ist, das zu der Reihenkondensatorschaltung (CA1) parallel geschaltet ist und durch serielles Kombinieren von zwei Armen gebildet ist, die aus Halbleitervorrichtungen (Q7, Q8) und einer Drosselspule (L2), die zwischen den mittleren Anschluss des vierten Armpaars und den Zwischenverbindungspunkt der Reihenkondensatorschaltung (CA1) geschaltet ist, aufgebaut sind.

5. Fünffachpegel-Umsetzer nach einem der Ansprüche 1 bis 4, wobei der Wechselspannungsschalter (SW1) durch Verbinden von Armen, die aus Halbleitervorrichtungen (Q11, Q12) in Gegenreihenschaltung aufgebaut sind, gebildet ist.

6. Fünffachpegel-Umsetzer nach einem der Ansprüche 1 bis 5, wobei der Wechselspannungsschalter (SW1) durch Halbleitervorrichtungen (Q21, Q22) mit Gegenblockierspannung in Gegenparallelschaltung gebildet ist.

## Revendications

1. Convertisseur à cinq niveaux qui comprend trois bornes à courant continu divisées en deux groupes et qui est adapté à générer cinq niveaux de tension à partir d'une source d'énergie d'entrée à courant continu (BA1) ayant trois niveaux de tension différents, y compris zéro, et à sortir aléatoirement et sélectivement les cinq niveaux de tension, le convertisseur à cinq niveaux comprenant :
une première, une seconde et une troisième paires de bras (QA1, QA2, QA3) constituées par une combinaison de deux bras en série composés par des dispositifs semi-conducteurs (Q1 - Q6) et un commutateur à courant alternatif (SW1) constitué par une combinaison de dispositifs semi-conducteurs (Q11, Q12 ; Q21, Q22), dans lesquelles
la première paire de bras (QA1) est connectée entre une première borne à courant continu (+2E) avec le potentiel le plus élevé de la source d'énergie à courant continu (BA1) et une seconde borne à courant continu (0) avec un potentiel intermédiaire, la seconde paire de bras (QA2) est connectée entre la seconde borne à courant continu (0) et une troisième borne à courant continu (-2E) avec le potentiel le plus bas, et la troisième paire de bras (QA3) est connectée entre la borne de milieu de la première paire de bras (QA1) et une borne de milieu de la seconde paire de bras (QA2), un circuit à condensateurs en série (CA1) dans lequel deux condensateurs. (C1, C2) sont connectés en série est connecté en parallèle à une troisième paire de bras (QA3), et le commutateur à courant alternatif (SW1) est connecté entre le point de connexion intermédiaire du circuit à condensateurs en série (CA1) et la borne de milieu de la troisième paire de bras (QA3), de telle sorte que la borne de milieu de la troisième paire de bras (QA3) sert de borne de sortie (U).

2. Convertisseur à cinq niveaux selon la revendication 1, dans lequel est prévu un réacteur à couplage (L1) qui est composé par un premier enroulement (La) connecté entre une extrémité du circuit à condensateurs en série (CA1) et la borne de milieu de la première paire de bras (QA1), et un second enroulement (Lb) est connecté entre l'autre extrémité du circuit à condensateurs en série (CA1) et la borne de milieu de la seconde paire de bras (QA2), de telle sorte qu'une composante de courant d'appel qui circule de la source d'énergie à courant continu (BA1) vers le circuit à condensateurs en série (CA1) via la première paire de bras (QA1), le circuit à condensateurs en série (CA1) et la seconde paire de bras (QA2) est inhibée.

3. Convertisseur à cinq niveaux selon la revendication 1 ou 2, comprenant en outre un circuit d'équilibrage de tension (VB1) pour maintenir des tensions égales des deux condensateurs (C1, C2) constituant le circuit à condensateurs en série (CA1).

4. Convertisseur à cinq niveaux selon la revendication 3, dans lequel le circuit d'équilibrage de tension (VB1) est constitué par une quatrième paire de bras qui est connectée en parallèle au circuit à condensateurs en série (CA1) et est constituée par une combinaison en série de deux bras composés par des dispositifs semi-conducteurs (Q7, Q8) et par un réacteur (L2) connecté entre la borne de milieu de la quatrième paire de bras et le point de connexion intermédiaire du circuit à condensateurs en série (CA1).

5. Convertisseur à cinq niveau selon l'une des revendications 1 à 4, dans lequel le commutateur à courant alternatif (SW1) est constitué par des bras de connexion composés par des dispositifs semi-conducteurs (Q11, Q12) en série inverse.

6. Convertisseur à cinq niveaux selon l'une des revendications 1 à 5, dans lequel le commutateur à courant alternatif (SW1) est constitué par une connexion inverse en parallèle de dispositifs semi-conducteurs (Q21, Q22) présentant une tension de blocage inverse.
